# EUROPEAN PATENT APPLICATION

(11) **EP 4 674 716 A1**
(43) Date of publication of application: **07.01.2026**
(21) Application number: 24773900.6
(22) Date of filing: 04.03.2024
(51) Int. Cl.: B60W 30/095, B60W 30/12, B60W 40/02, B60W 30/09

(54) **LANE KEEPING METHOD AND APPARATUS**

(30) Priority: 20.03.2023 CN 202310279597
(71) Applicant: Shenzhen Yinwang Intelligent Technologies Co., Ltd., Shenzhen, Guangdong 518110 (CN)
(72) Inventor: QI, Renjie, Shenzhen, Guangdong 518129 (CN); ZHANG, Renxie, Shenzhen, Guangdong 518129 (CN); JIA, Jiefeng, Shenzhen, Guangdong 518129 (CN); LIANG, Baoyu, Shenzhen, Guangdong 518129 (CN)
(74) Representative: Gill Jennings & Every LLP
(86) International application number: PCT/CN2024/079900
(87) International publication number: WO 2024/193332

(57) **Abstract**

A lane keeping method and apparatus are provided. The method includes: obtaining a risk of collision between a vehicle and a surrounding obstacle; and when determining that there is a lane departure intent, determining, based on the collision risk, whether to activate a lane keeping function of the vehicle. This application may be applied to an intelligent vehicle or an electric vehicle. Whether to activate the lane keeping function is determined based on the risk of collision between the vehicle and the surrounding obstacle, so that activation of the lane keeping function can be more intelligent, and an unexpected collision between the vehicle and the surrounding obstacle caused by inappropriate activation or exit of the lane keeping function in a complex environment interaction scenario can be avoided.

## Description

This application claims priority to Chinese Patent Application No. 202310279597.7, filed with the China National Intellectual Property Administration on March 20, 2023 and entitled "LANE KEEPING METHOD AND APPARATUS", which is incorporated herein by reference in its entirety.

### TECHNICAL FIELD

Embodiments of this application relate to the field of intelligent driving, and more specifically, to a lane keeping method and apparatus.

### BACKGROUND

With rapid development of the automotive industry, many assisted driving and autonomous driving technologies emerge, such as a lane keeping technology, so that driving pressure can be alleviated and safety and convenience can be improved. A lane keeping assist system can help correct a traveling route when a vehicle gradually departs from a current lane. Usually, the system warns a driver, to remind the driver to correct the traveling route. However, the system further makes the vehicle turn slightly to prevent the vehicle from continuously departing from the lane. An emergency lane keeping assist system further enhances a function of the lane keeping assist system. When an emergency is detected, the emergency lane keeping assist system intervenes more actively.

In a current standard test scenario, performance of the lane keeping assist system or the emergency lane keeping assist system is usually evaluated based on only a position relationship between the vehicle and a lane line. In a current technical background, a working mode of the system is relatively limited. Usually, only the foregoing standard test scenario is considered, and interaction between the vehicle and a surrounding environment is not intelligent enough. As a result, an activation occasion of the function cannot meet a human expectation, and safety assurance in a complex scenario is not complete enough. This reduces safety and comfort of the function.

In view of this, a lane keeping solution with a more intelligent activation occasion urgently needs to be developed.

### SUMMARY

Embodiments of this application provide a lane keeping method and apparatus, to determine, based on a risk of collision between a vehicle and a surrounding obstacle, whether to activate a lane keeping function, so as to avoid a collision between the vehicle and the surrounding obstacle caused by inappropriate activation or exit of the lane keeping function in a complex environment interaction scenario.

According to a first aspect, a lane keeping method is provided. The method may be performed by a vehicle, or may be performed by a terminal (for example, a computing platform) disposed in the vehicle, or may be performed by a chip or a processing circuit in the terminal. This is not limited in embodiments of this application.

The method includes: obtaining a risk of collision between a vehicle and a surrounding obstacle; and when determining that there is a lane departure intent, determining, based on the collision risk, whether to activate a lane keeping function of the vehicle.

For example, the risk of collision between the vehicle and the surrounding obstacle may be predicted based on motion status information of the ego vehicle and motion status information of the surrounding obstacle. For example, information such as whether the vehicle collides with the surrounding obstacle, the obstacle that is to collide with the vehicle, and a time and a location at which the collision occurs during occurrence of lane departure of the vehicle in a case that the lane keeping function is not activated may be predicted.

In this application, whether to activate the lane keeping function can be determined with reference to a driving intent of a driver and an interaction status with the surrounding obstacle in an environment in an actual traveling scenario of the vehicle. This can avoid an unexpected collision between the vehicle and the surrounding obstacle caused by an inappropriate activation or exit occasion of the lane keeping function in a complex interaction scenario.

With reference to the first aspect, in some implementations of the first aspect, the method may further include: determining a first area based on the lane departure intent, where the first area is located in an adjacent lane of a first lane in which the vehicle is currently located; and the determining, based on the collision risk, whether to activate a lane keeping function of the vehicle may include: when a risk of collision between the vehicle and the surrounding obstacle in the first area meets a preset condition, activating the lane keeping function of the vehicle; or when the vehicle has a collision risk in another area outside the first area, controlling the lane departure function to be in a deactivated state.

For example, when it is determined that there is the lane departure intent, an expected target point of lane departure and an expected cut-in point at which the vehicle travels into a departure-side lane may be determined. The first area may be determined based on the expected target point and the expected cut-in point. In other words, the first area may be understood as an area that the vehicle travels into after the vehicle departs from the current lane when there is the lane departure intent in a case in which the lane keeping function is not activated.

For example, that the lane departure function is controlled to be in the deactivated state may mean that the lane keeping function is not activated.

In this application, whether to activate the lane keeping function is determined based on whether an area in which the predicted collision risk occurs is within the first area, so that a probability of incorrectly triggering the lane keeping function can be reduced, a quantity of surrounding obstacles that need to be considered can be reduced, occupation of computing resources can be reduced, and real-time performance can be improved.

With reference to the first aspect, in some implementations of the first aspect, the obtaining a risk of collision between a vehicle and a surrounding obstacle may include: obtaining first prediction information of the vehicle, where the first prediction information indicates a first time to lane cross and the first area, and the first time to lane cross is a time at which the vehicle travels from the first lane to the first area; predicting motion status information of the surrounding obstacle; and determining the risk of collision between the vehicle and the surrounding obstacle based on the first motion prediction information and the predicted motion status information of the surrounding obstacle.

For example, pose information of the obstacle at future moments may be predicted based on a current motion status and/or a historical motion status of the surrounding obstacle, and the risk of collision between the obstacle and the vehicle may be determined based on the predicted pose information of the obstacle.

In this application, whether to activate the lane keeping function is determined with reference to the risk of collision between the vehicle and the surrounding obstacle in the future, so as to avoid an unexpected collision risk caused by an inappropriate activation occasion of the lane keeping function.

With reference to the first aspect, in some implementations of the first aspect, the determining, based on the collision risk, whether to activate a lane keeping function of the vehicle may include: inputting the collision risk into a prediction model, to obtain a probability value of activating the lane keeping function, where the prediction model is obtained through training based on sample data, and the sample data includes information about a collision between a sample vehicle and a sample obstacle and a determining result of whether to activate a lane keeping function of the sample vehicle; and when the probability value is within a first interval, activating the lane keeping function of the vehicle; or when the probability value is within a second interval, controlling the lane keeping function to be in the deactivated state. A minimum value of the first interval is greater than a maximum value of the second interval.

For example, the probability value (which may also be referred to as a first probability value) of activating the lane keeping function may be determined based on information such as a time and a location of the collision between the vehicle and the surrounding obstacle in a manner such as table lookup or the prediction model. Whether to activate the lane keeping function is determined based on an interval to which the first probability value belongs. For example, the first probability value may be calculated based on an activation model and information such as a time and an area of occurrence of the collision between the vehicle and the surrounding obstacle, and a time of lane departure of the vehicle to the first area.

In this application, whether to activate the lane keeping function is determined based on the interval to which the first probability value belongs, so that an activation decision can be determined more continuously, thereby avoiding fluctuation of a decision result.

With reference to the first aspect, in some implementations of the first aspect, the method may further include: determining the first interval and the second interval based on information about manipulation of a driver for the vehicle.

In this application, the first interval and the second interval are determined based on manipulation of the driver for the vehicle, so that an activation occasion of the lane keeping function can be more intelligent, and a complex driving scenario can be better coped with.

With reference to the first aspect, in some implementations of the first aspect, the method further includes: obtaining a first planned route and a second planned route in the first lane in which the vehicle is currently located, where curvatures of the first planned route and the second planned route are different; determining a target planned route from the first planned route and the second planned route based on the collision risk, the curvature of the first planned route, and the curvature of the second planned route; and when the lane keeping function is activated, controlling, based on the target planned route, the vehicle to travel in the first lane.

For example, a plurality of candidate planned routes may be determined to implement the lane keeping function, and the target planned route that considers both safety and comfort may be selected based on curvatures of the plurality of candidate planned routes. The first planned route or the second planned route may be any candidate planned route.

In this application, the target planned route is determined with reference to the curvatures of the candidate planned routes and the collision risk, so that both safety and comfort of the lane keeping function in a correction and aligning process of the vehicle can be considered.

With reference to the first aspect, in some implementations of the first aspect, the method may further include: determining a first boundary based on the collision risk, where a part or all of an area of the first lane in which the vehicle is currently located is included within the first boundary; and when the lane keeping function is activated, controlling the vehicle to travel within the first boundary.

In this application, control traveling boundaries of different lane keeping functions are planned based on different collision risks, so that both safety and feasibility of the lane keeping function in a correction and aligning process of the vehicle can be considered.

With reference to the first aspect, in some implementations of the first aspect, the activating the lane keeping function of the vehicle includes: determining a change rate of a turning parameter based on the collision risk; and controlling turning of the vehicle based on the change rate of the turning parameter.

In an embodiment, the first control parameter may include steering torque of a steering wheel.

In this application, the change rate of the turning parameter is adjusted based on the collision risk, so that a response speed of the lane keeping function can be ensured. In this way, the driver can sense, in the sense of body, a quick response of a correction process in the extreme emergency situation.

With reference to the first aspect, in some implementations of the first aspect, a prompt apparatus is disposed on the vehicle, and the method may further include: when the lane keeping function is activated, prompting, based on the collision risk by using the prompt apparatus, a user with existence of the collision risk due to lane departure.

In this application, the lane keeping function is activated due to the risk of collision between the vehicle and the surrounding obstacle, so that the vehicle fails to change a lane, and a running status of the vehicle is not as expected by the user. A panic of the user can be alleviated by prompting the user with existence of the collision risk due to lane departure.

According to a second aspect, a lane keeping apparatus is provided. The apparatus may include: an obtaining unit, configured to obtain a risk of collision between a vehicle and a surrounding obstacle; and a processing unit, configured to: when determining that there is a lane departure intent, determine, based on the collision risk, whether to activate a lane keeping function of the vehicle.

With reference to the second aspect, in some implementations of the second aspect, the processing unit may be further configured to determine a first area based on the lane departure intent, where the first area is located in an adjacent lane of a first lane in which the vehicle is currently located; and the processing unit may be configured to: when a risk of collision between the vehicle and the surrounding obstacle in the first area meets a preset condition, activate the lane keeping function of the vehicle; or when the vehicle has a collision risk in another area outside the first area, control the lane keeping function of the vehicle to be in a deactivated state.

With reference to the second aspect, in some implementations of the second aspect, the obtaining unit may be configured to: obtain first prediction information of the vehicle, where the first prediction information indicates a first time to lane cross and the first area, and the first time to lane cross is a time at which the vehicle travels from the first lane to the first area; predict motion status information of the surrounding obstacle; and determine the risk of collision between the vehicle and the surrounding obstacle based on the first motion prediction information and the predicted motion status information of the surrounding obstacle.

With reference to the second aspect, in some implementations of the second aspect, the processing unit may be configured to: input the collision risk into a prediction model, to obtain a probability value of activating the lane keeping function, where the prediction model is obtained through training based on sample data, and the sample data includes information about a collision between a sample vehicle and a sample obstacle and a determining result of whether to activate a lane keeping function of the sample vehicle; and when the probability value is within a first interval, activate the lane keeping function of the vehicle; or when the probability value is within a second interval, control the lane keeping function of the vehicle to be in the deactivated state, where a maximum value of the second interval is less than a minimum value of the first interval.

With reference to the second aspect, in some implementations of the second aspect, the processing unit may be further configured to determine the first interval and the second interval based on information about manipulation of a driver for the vehicle.

With reference to the second aspect, in some implementations of the second aspect, the processing unit may be configured to: obtain a first planned route and a second planned route in the first lane in which the vehicle is currently located, where curvatures of the first planned route and the second planned route are different; determine a target planned route from the first planned route and the second planned route based on the collision risk, the curvature of the first planned route, and the curvature of the second planned route; and when the lane keeping function is activated, control, based on the target planned route, the vehicle to travel in the first lane.

With reference to the second aspect, in some implementations of the second aspect, the processing unit may be configured to: determine a first boundary based on the collision risk, where a part or all of an area of the first lane in which the vehicle is currently located is included within the first boundary; and when the lane keeping function is activated, control the vehicle to travel within the first boundary.

With reference to the second aspect, in some implementations of the second aspect, the processing unit may be configured to: determine a change rate of a turning parameter based on the collision risk; and when the lane keeping function is activated, control turning of the vehicle based on the change rate of the turning parameter.

With reference to the second aspect, in some implementations of the second aspect, a prompt apparatus is disposed on the vehicle, and the processing unit may be further configured to: when the lane keeping function is activated, prompt, based on the collision risk by using the prompt apparatus, a user with existence of the collision risk due to lane departure.

According to a third aspect, a lane keeping apparatus is provided. The apparatus includes: a memory, configured to store a computer program; and a processor, configured to perform the computer program stored in the memory, to enable the apparatus to perform the method according to any one of the first aspect and the possible implementations of the first aspect.

According to a fourth aspect, a vehicle is provided. The vehicle includes the apparatus according to any one of the second aspect or the third aspect and the possible implementations of the second aspect or the third aspect.

According to a fifth aspect, a computer program product is provided. The computer program product includes computer program code, and when the computer program code is run on a computer, the computer is enabled to perform the method according to any one of the first aspect and the possible implementations of the first aspect.

According to a sixth aspect, a computer-readable storage medium is provided. The computer-readable storage medium stores a computer program, and when the computer program is run on a computer, the computer is enabled to perform the method according to any one of the first aspect and the possible implementations of the first aspect.

According to a seventh aspect, a chip is provided. The chip includes a circuit, configured to perform the method according to any one of the first aspect and the possible implementations of the first aspect.

### BRIEF DESCRIPTION OF DRAWINGS

FIG. 1 is a functional block diagram of a vehicle according to an embodiment of this application;
FIG. 2 shows a system architecture for implementing a lane keeping method according to an embodiment of this application;
FIG. 3 is a diagram of a lane keeping method according to an embodiment of this application;
FIG. 4 is a diagram of a method for predicting a lane change route of a vehicle according to an embodiment of this application;
FIG. 5 is a diagram of a lane departure scenario according to an embodiment of this application;
FIG. 6 is a diagram of a vehicle traveling scenario according to an embodiment of this application;
FIG. 7 is a diagram of a vehicle traveling scenario according to an embodiment of this application;
FIG. 8 is a diagram of a method for activating a lane keeping function according to an embodiment of this application;
FIG. 9 is a diagram of a lane keeping scenario according to an embodiment of this application;
FIG. 10 is a diagram of another lane keeping scenario according to an embodiment of this application;
FIG. 11 is a diagram of another lane keeping scenario according to an embodiment of this application;
FIG. 12 is a diagram of an interaction interface according to an embodiment of this application;
FIG. 13 is a block diagram of a lane keeping apparatus according to an embodiment of this application; and
FIG. 14 is a block diagram of another lane keeping apparatus according to an embodiment of this application.

### DESCRIPTION OF EMBODIMENTS

The following describes the technical solutions in embodiments of this application with reference to the accompanying drawings.

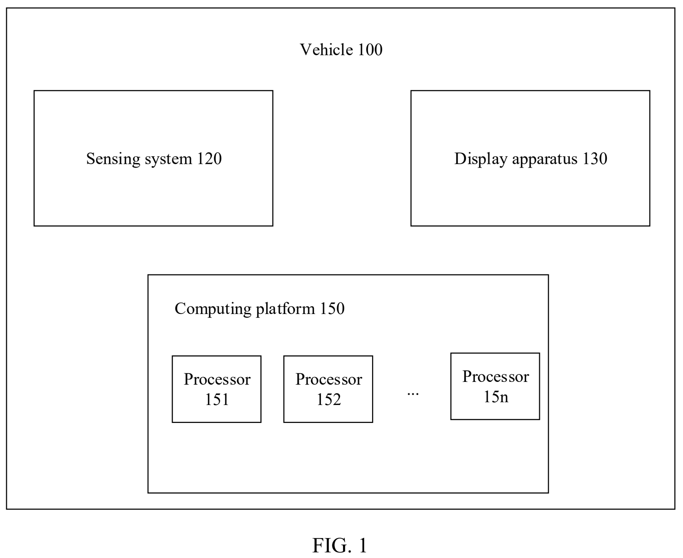

FIG. 1 is a functional block diagram of a vehicle 100 according to an embodiment of this application. The vehicle 100 may include a sensing system 120, a display apparatus 130, and a computing platform 150. The sensing system 120 may include one or more sensors that sense information about a surrounding environment of the vehicle 100. For example, the sensing system 120 may include a positioning system. The positioning system may be a global positioning system (global positioning system, GPS), a BeiDou system, or another positioning system. The sensing system 120 may alternatively include one or more of an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration file to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The vehicle 100 in this application may be a vehicle in a broad sense, and may be a means of transportation (for example, a commercial vehicle, a passenger vehicle, a motorcycle, or an aerocar), an industrial vehicle (for example, a forklift, a trailer, or a tractor), an engineering vehicle (for example, an excavator, a bulldozer, or a crane), an agricultural device (for example, a mower or a harvester), an entertainment device, or the like. A type of the vehicle is not specifically limited in embodiments of this application.

As described above, through configuration of an active safety function for a vehicle, road traffic accidents and related injuries and deaths can be greatly reduced, and safety performance of the vehicle can be greatly improved. A lane keeping function is one of important functions in active safety functions of a vehicle, and is usually used as a standard function of an advanced driver assistance system (advanced driver assistance system, ADAS) of the vehicle. A lane keeping assist (lane keeping assist, LKA) system can assist in correcting a traveling route when the vehicle departs from a lane, so that a distance by which the vehicle exceeds the lane in a traveling process is within a preset range or even the vehicle does not exceed the lane. An emergency lane keeping assist (emergency lane keeping assist, ELKA) system can further warn a driver, to remind the driver to correct a traveling route. ELKA can intervene more actively when an emergency is detected. In a standard test manner of LKA or ELKA, in scenarios with different road marks (for example, a case in which a lane is marked with a solid line or a dashed line, or even a case in which there is no road mark), a degree of proximity between a vehicle and a lane when the LKA or ELKA function intervenes in a traveling route is evaluated, to test performance of the function. Currently, a working mode of LKA or ELKA is relatively limited, and usually only impact of a road mark on the function is considered, that is, only a usage status in the foregoing standard test scenario is considered, but an interaction status between the vehicle and a surrounding environment during traveling is not considered. For example, how LKA or ELKA intervenes in a traveling process of the vehicle when a static or dynamic obstacle exists in the environment is not considered. For another example, when the vehicle is intervened, a driving intent of the driver is not fully considered, so that an activation occasion of the function is not human-like enough. In other words, for a complex driving scenario that may exist in an actual traveling process of the vehicle, the function is not fully considered. As a result, safety assurance for the complex scenario is not complete enough, and safety and comfort in an activation process of the function are reduced.

Embodiments of this application provide a lane keeping method and apparatus, to determine, based on a risk of collision between a vehicle and a surrounding obstacle, whether to activate a lane keeping function, so as to avoid a collision between the vehicle and the surrounding obstacle caused by inappropriate activation or exit of the lane keeping function in a complex environment interaction scenario.

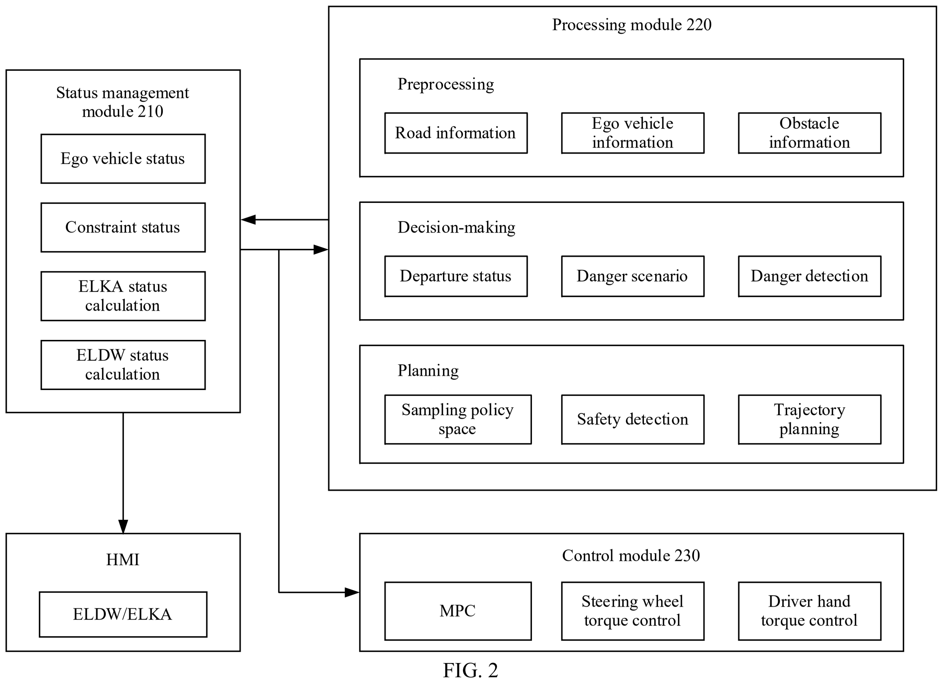

For example, FIG. 2 shows a system architecture for implementing a lane keeping method according to an embodiment of this application. The system 200 may include a status management module 210, a processing module 220, and a control module 230.

For example, the status management module 210 may manage one or more of ego vehicle status information, constraint status information, ELKA status information, and emergency lane departure warning (emergency lane departure warning, ELDW) status information. For example, the status management module 210 may manage the ego vehicle status information such as a vehicle speed, a transverse velocity, a longitudinal velocity, a yaw angle, and a yaw velocity. For another example, the constraint status information may include constraint status information from a driver, such as a steering wheel angle and a turn signal working mode. The constraint status information may also be referred to as driver constraint status information. For another example, the constraint status information may include constraint status information of a lane line for vehicle traveling, such as a transverse distance between the vehicle and the lane line and a traffic mode indicated by the lane line. The constraint status information may also be referred to as lane constraint information. For another example, working status information of ELKA may be calculated and managed, to determine whether to trigger a lane keeping function. For another example, working status information of ELDW may be calculated and managed, to determine whether to prompt a user that the vehicle departs from a current lane in a traveling process.

For example, the processing module 220 may be configured to preprocess data. For example, information collected by a sensor such as a radar or a camera is processed, so that the constraint status information and/or surrounding obstacle information may be obtained. The processing module 220 may also be configured to determine whether to activate the lane keeping function. For example, the processing module 220 may determine a departure status of the vehicle in the current lane. For another example, whether there is a collision risk in the scenario in which the vehicle is located may also be determined. The processing module 220 may also be configured to plan implementation effect of the lane keeping function. For example, one or more planned routes may be determined, to control the vehicle to travel in the current lane. For another example, an appropriate route may be determined from the one or more planned routes, and a safe boundary of controlling traveling of the vehicle based on the route may be further determined.

For example, the control module 230 may be configured to control traveling of the vehicle based on a planning result of the processing module and/or status information managed by the status management module. For example, the vehicle may be controlled by using a control method such as model predictive control (model predictive control, MPC). For another example, torque of a steering wheel may be controlled, and torque of a driver's hand may be adjusted.

In some possible implementation scenarios, an information exchange process between the status management module, the processing module, and the control module may be implemented by using an internal circuit of the vehicle.

In some possible implementation scenarios, the system may also include an interaction apparatus, for example, a display apparatus or a speaker, to implement a human-machine interaction process. The interaction apparatus may be used to prompt the user with a risk that exists when the lane keeping function is used. For example, a working status of ELDW and/or a working status of ELKA may be indicated to the user by using a human-machine interaction (human-machine interaction, HMI) interface.

It should be understood that the foregoing description of the system 200 is merely an example for ease of description. In some possible implementations, the system 200 may include more or fewer modules. This is not limited in embodiments of this application.

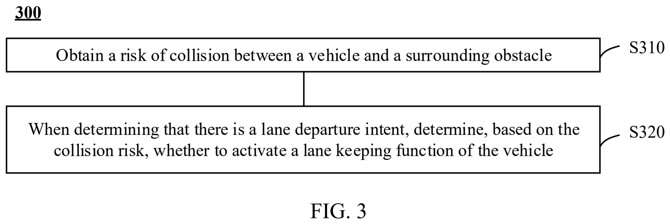

For example, FIG. 3 is a diagram of a lane keeping method according to an embodiment of this application. The method 300 may be performed by a vehicle, or may be performed by the foregoing computing platform, or may be performed by a processor or a processing circuit in the computing platform. The method 300 may include the following steps.

S310: Obtain a risk of collision between a vehicle and a surrounding obstacle.

For example, surrounding environment information may be obtained based on data collected by a sensing sensor like a camera or a radar. The risk of collision between the vehicle and the surrounding obstacle may be detected based on the surrounding environment information.

In some possible implementations, a motion status of the surrounding obstacle may be predicted, and the risk of collision between the surrounding obstacle and the vehicle is determined based on the predicted motion status. For example, a future motion status such as a speed and a pose of the surrounding obstacle may be predicted based on a historical motion status and/or a current motion status such as a speed and a pose of the surrounding obstacle such as a pedestrian, a vehicle, or a rider. For another example, with reference to a predicted or planned traveling route of an ego vehicle, whether the ego vehicle collides with a surrounding obstacle may be determined, and a time and a location of the collision that occurs between the vehicle and the surrounding obstacle may be predicted.

S320: When determining that there is a lane departure intent, determine, based on the collision risk, whether to activate a lane keeping function of the vehicle.

For example, a first area may be determined based on the lane departure intent. The first area is located in an adjacent lane of a lane in which the vehicle is currently located. When there is the lane departure intent, if the lane keeping function is not activated, the vehicle travels from the current lane into the lane in which the first area is located. Correspondingly, a time at which the vehicle travels into the first area may be predicted.

In an embodiment, when there is a risk of collision between the vehicle and the obstacle in the first area, the lane keeping function may be activated. In another embodiment, when there is a risk of collision between the vehicle and the obstacle in another area outside the first area, the lane keeping function may not be activated.

In another embodiment, when it is determined that there is the lane departure intent, an expected target point of lane departure and an expected cut-in point at which the vehicle travels into a departure-side lane may be determined. The first area may be determined based on the expected target point and the expected cut-in point. In other words, the first area may be understood as an area that the vehicle travels into after the vehicle departs from the current lane in a scenario in which the lane keeping function is not activated.

In some possible implementations, first prediction information may be obtained, where the first prediction information may indicate the first area and a first time to lane cross; motion status information of the surrounding obstacle may be predicted based on the surrounding environment information; and whether there is the risk of collision between the vehicle and the surrounding obstacle may be determined based on the first prediction information and the predicted motion status information of the surrounding obstacle. For example, a probability of collision between the vehicle and the surrounding obstacle in the first area may be predicted, so as to determine a collision risk in the first area. For another example, a probability of collision between the vehicle and the surrounding obstacle in another area outside the first area may be predicted, so as to determine a risk of collision between the vehicle and the surrounding obstacle in the another area.

In some possible implementations, a first probability value may be determined based on the risk of collision between the vehicle and the surrounding obstacle; and when the first probability value is within a first interval, the lane keeping function of the vehicle is activated; or when the first probability value is within a second interval, the lane keeping function of the vehicle is not activated. A range of the first interval is greater than a range of the second interval, and a minimum value of the first interval is greater than a maximum value of the second interval. For example, the first interval may be (0.5, 1], and the corresponding second interval may be (0.2, 0.5]. For another example, the first interval may be [0.6, 1), and the corresponding second interval may be (0.3, 0.6). The first interval and the second interval may alternatively be of other ranges. This is not limited in embodiments of this application. For another example, a collision risk database may be obtained, and the first probability value is determined in a table lookup manner based on the database and a time and a location at which the vehicle collides with the surrounding obstacle. For another example, the collision risk may be input into a prediction model, to obtain the first probability value. For another example, the prediction model may be obtained through sample training, and sample data may include a sample vehicle, a sample obstacle, and whether the sample vehicle collides with the sample obstacle when the lane keeping function is not activated.

In some possible implementations, the first interval and the second interval may be determined based on manipulation information of a driver. In an embodiment, the first interval and the second interval may be determined based on steering hand torque applied by the driver on a steering wheel.

In some possible implementations, the method may further include: obtaining a plurality of planned routes in a first lane in which the vehicle is currently located, where curvatures of the planned routes are different from each other; determining a target planned route from the plurality of planned routes based on the risk of collision between the vehicle and the surrounding obstacle and the curvatures of the planned routes; and when the lane keeping function is activated, controlling, based on the target planned route, the vehicle to travel in the first lane. For example, when the lane keeping function is implemented through vehicle correction, a plurality of route points may be selected in the current lane of the vehicle. The plurality of route points may be understood as candidate locations of the vehicle upon completion of a correction action. The plurality of route points may correspond to a plurality of planned routes. The target planned route may be determined from the plurality of planned routes based on comfort and/or safety of the vehicle, and traveling of the vehicle is controlled based on the target planned route. Because the plurality of routes respectively correspond to different candidate locations of the vehicle upon completion of the correction action, the plurality of routes may have different curvatures.

In some possible implementations, the method may further include: determining a first boundary based on the collision risk, where a part or all of an area of the first lane in which the vehicle is currently located may be included within the first boundary; and when the lane keeping function is activated, controlling, based on the first boundary, the vehicle to travel within the first boundary.

In an embodiment, when the vehicle is controlled to travel, there may be a difference between an actual traveling route of the vehicle and the planned route. The first boundary may be understood as a boundary of an area in which the vehicle can travel when vehicle correction is performed to implement the lane keeping function. In other words, even if the actual traveling route of the vehicle may deviate from the planned route, the vehicle still keeps traveling in the area within the first boundary. For example, a travelable area in which the vehicle does not collide with the surrounding obstacle may be determined based on the risk of collision between the vehicle and the surrounding obstacle, and the first boundary is determined with reference to the lane in which the vehicle is currently located.

In another embodiment, the target planned route may be determined from a plurality of routes within the first boundary based on the curvatures of the planned routes.

In some possible implementations, activating the vehicle keeping function may include: determining a change rate of a first control parameter based on the collision risk; and controlling turning of the vehicle based on the change rate of the first control parameter. For example, the first control parameter may be a control parameter such as steering torque or a transverse angular velocity of the steering wheel, and the control parameter may represent a rate at which the vehicle turns. For another example, when there is a relatively high risk of collision with the surrounding obstacle in a departure area, a relatively high change rate of the steering torque of the steering wheel may be used when the lane keeping function is activated, to ensure a response speed, so that the driver can sense, in the sense of body, a quick response of the lane keeping function to a vehicle correction process in an extreme emergency situation. For another example, a feature value such as a peak value or an average value of the change rate of the first control parameter may be adaptively adjusted based on the collision risk.

In some possible implementations, the vehicle includes an interaction apparatus, and activating the vehicle keeping function may include: determining a prompt level based on the collision risk; and prompting, based on the prompt level by using the interaction apparatus, a user with the collision risk that exists.

In some possible implementations, the method 300 may alternatively be performed by a cloud server, or may be performed by a chip, a processing circuit, or the like disposed in the cloud server. For example, the cloud server may exchange information with the vehicle, and the cloud server may indicate, by delivering an instruction, a working status of the lane keeping function of the vehicle.

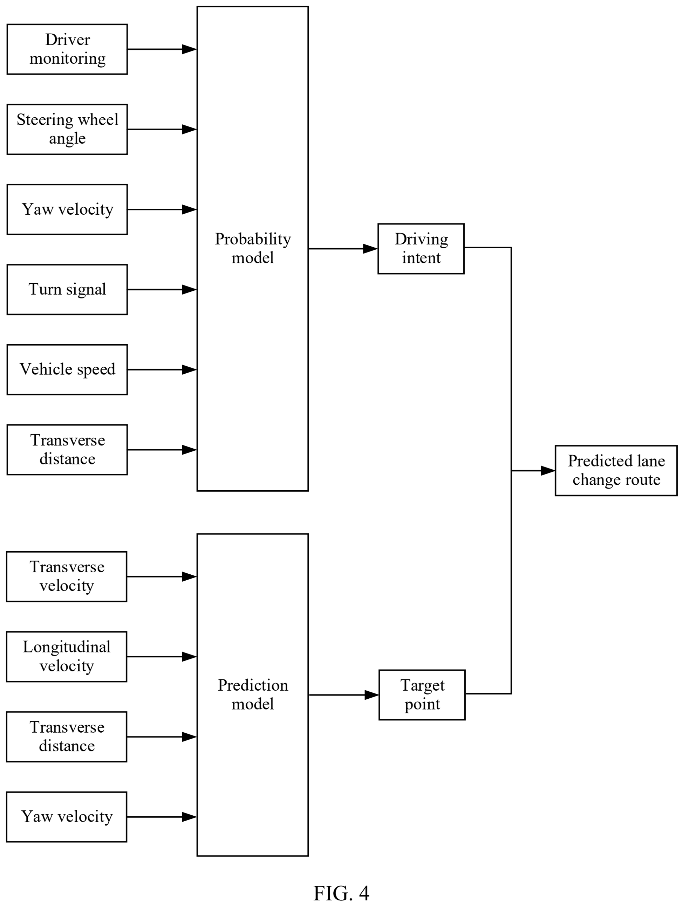

For ease of understanding and description, the lane keeping method provided in embodiments of this application is described below with reference to FIG. 4 to FIG. 12. Method embodiments in FIG. 4 to FIG. 12 may be understood as an extension to the method 300.

For example, FIG. 4 is a diagram of a method for predicting a lane change route of a vehicle according to an embodiment of this application.

For example, a driving intent of a driver may be determined based on ego vehicle status information and driver manipulation information. For example, whether the driver has a lane departure intent may be determined based on a steering wheel angle of the vehicle, a yaw velocity, a transverse distance between the vehicle and a lane line, a turn signal status of the vehicle, and a driver model. For another example, the driver model may be obtained through machine learning, or the driver model may be an explicit mathematical model developed based on cognitive psychology. This is not limited in embodiments of this application.

In an embodiment, a gaze area of a line of sight of the driver may be determined by using a driver monitoring system. For example, when it is detected that the driver focuses on a rearview mirror on a lane departure side or another related field of view on a lane departure side for a long time, it may be determined that the driver has the lane departure intent.

In another embodiment, whether the driver has the lane departure intent may be determined based on information about manipulation performed by the driver on a turn signal switch of the vehicle. In other words, whether the driver has a lane change intent is determined.

In another embodiment, whether the driver has the lane departure intent may be determined based on an input of the driver to the steering wheel.

In another embodiment, as shown in FIG. 4, whether the driver has a lane keeping intent is predicted based on a probability model, information collected by the driver monitoring system, a steering wheel angle of the vehicle, a yaw velocity, a turn signal status, a vehicle speed, and a transverse distance between the vehicle and a lane. For example, based on the probability model, a probability that the driver has the lane keeping intent may be determined, and/or a probability that the driver has the lane departure intent may be determined.

In some possible implementations, the driving intent of the driver may be predicted based on the driver model and more or less information.

In some possible implementations, when it is determined that the driver has the lane departure intent, a lane change route of the vehicle may be predicted based on an ego vehicle status of the vehicle. For example, the lane change route of the vehicle may be predicted with reference to a current location of the vehicle based on the driver model and information such as a transverse velocity of the vehicle, a longitudinal velocity, a transverse distance between the vehicle and a lane line, and a yaw velocity. For another example, as shown in FIG. 4, based on a prediction model and ego vehicle status information such as the transverse velocity and the longitudinal velocity of the vehicle, a target point of lane change of the vehicle may be determined and the lane change route of the vehicle may be predicted.

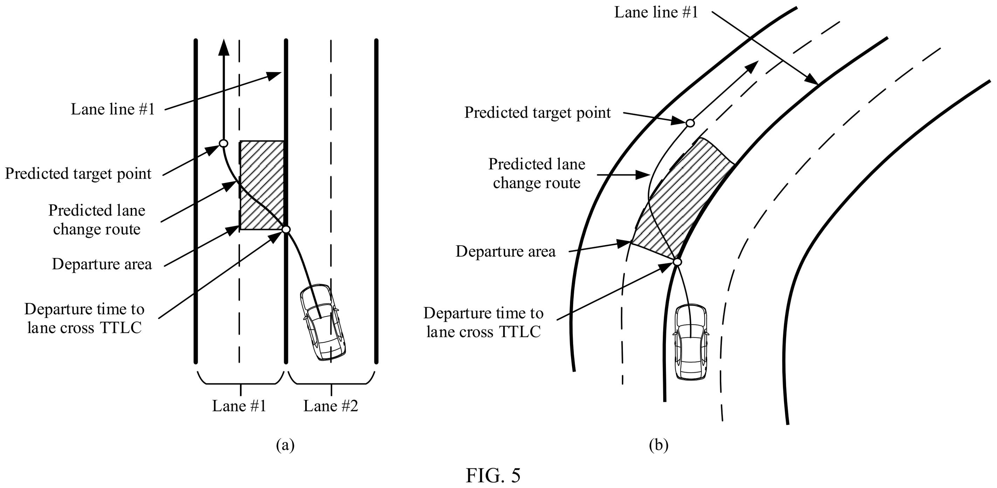

For example, FIG. 5 is a diagram of a lane departure scenario according to an embodiment of this application. As shown in (a) in FIG. 5, a vehicle currently located in a lane #2 has an intent of changing to a lane #1. In other words, the vehicle has an intent of departure from the lane #2 to the lane #1. The first area in the method 300 is located in the lane #1.

For example, when it is determined that the driver has the lane departure intent, a target point of departure of the vehicle may be predicted based on a current traveling status of the vehicle and/or a historical traveling status of the vehicle. A traveling trajectory of the vehicle may be predicted based on the target point.

In an embodiment, a scenario shown in (a) in FIG. 5 is used as an example. After passing the target point, the vehicle may travel along the lane #1 after lane change is completed. A traveling route between the current location of the vehicle and the target point may be predicted by predicting the target point. In other words, a traveling route (which may be briefly referred to as a lane change route) of the vehicle in a lane change process may be predicted. An intersection point between the lane change route and a lane line on a departure side may be determined based on the lane change route. In other words, a point that is on a lane line #1 and that is passed by the vehicle when the vehicle travels from the lane #2 into the lane #1, and a time at which the vehicle reaches the intersection point from the current location may be predicted. The time may be referred to as a time to lane cross (time to lane cross, TTLC), or may be referred to as a departure time to lane cross, and the intersection point may be referred to as a TTLC point. The TTLC point may be understood as an expected cut-in point at which the vehicle travels into a departure-side lane.

In some possible implementations, a departure area of the vehicle in a lane departure process may be determined based on the target point and the TTLC point. For example, the departure area may include an area of a half-lane width between the TTLC point and the target point in a lane direction, as shown in (a) and (b) in FIG. 5. For another example, a risk of collision between the vehicle and another obstacle may be predicted based on the departure area. For another example, in some possible implementations, a width of the departure area may be determined based on a transverse width between the TTLC point and the target point. The departure area may be understood as the first area in the method 300.

In an embodiment, a lane line curvature in (b) in FIG. 5 is different from a lane line curvature in (a) in FIG. 5. When the foregoing parameters such as the departure area and the TTLC are determined, a Frenet (Frenet) coordinate system may be established along an extension direction of the lane line, and the foregoing parameters are determined based on the coordinate system, to reduce impact of different lane line curvatures on calculation results of the parameters.

In some possible implementations, when it is determined that the driver has the lane keeping intent (that is, when it is determined that the driver does not have the lane departure intent), the TTLC and the departure area may not need to be determined, to reduce a probability of incorrectly triggering lane keeping.

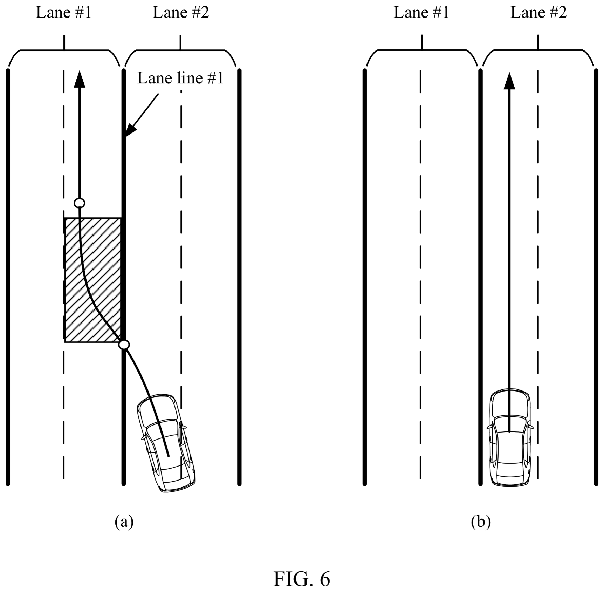

For example, FIG. 6 is a diagram of a vehicle traveling scenario according to an embodiment of this application.

In an embodiment, as shown in (a) in FIG. 6, even if a transverse distance between the vehicle and a lane line #1 is relatively long, when it is determined that there is an intent of departure from a lane #2 to a lane #1, a lane change route of the vehicle may be predicted, and a departure area and a TTLC may be calculated.

In another embodiment, as shown in (b) in FIG. 6, even if a transverse distance between the vehicle and a lane line #1 is relatively short, when it is determined that the vehicle does not have an intent of changing from a lane #2 to a lane #1, a lane change route of the vehicle may not need to be predicted, and a TTLC and/or a departure area may not need to be calculated.

In embodiments of this application, when it is determined that the driver has the lane keeping intent, even if a transverse distance between the vehicle and the lane line is relatively short, the TTLC and the departure area may not need to be determined, so that frequent triggering of the lane keeping function caused by a driving habit of the driver can be avoided.

In embodiments of this application, when it is determined that the driver has the lane departure intent, the lane change route of the vehicle is predicted, and the TTLC and the departure area are determined, so as to determine a risk of collision between the vehicle and the surrounding obstacle. This helps reduce a case in which the lane keeping function is incorrectly activated and a case in which an activation occasion is inappropriate.

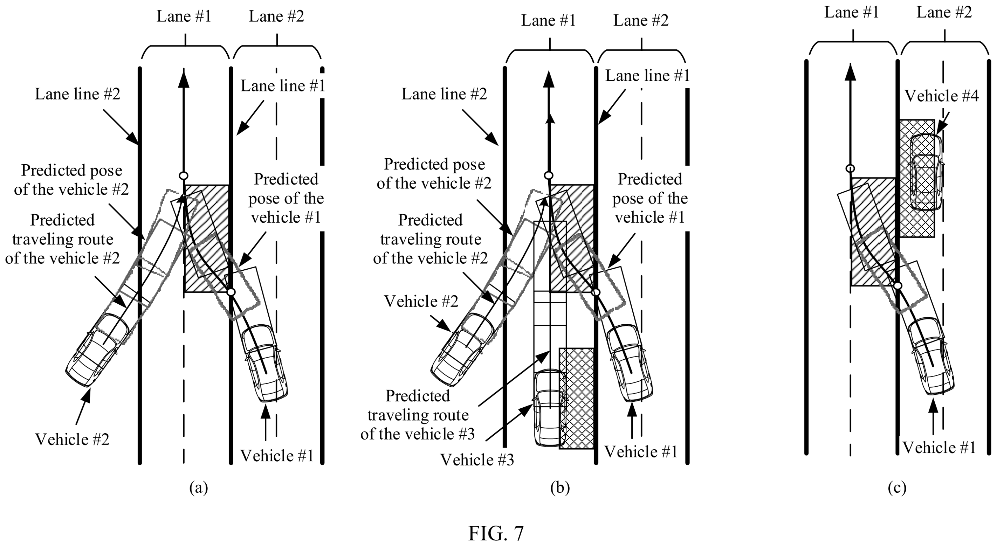

For example, FIG. 7 is a diagram of a vehicle traveling scenario according to an embodiment of this application. (a), (b), and (c) in FIG. 7 respectively show different traveling scenarios of a vehicle #1.

In an embodiment, as shown in (a) in FIG. 7, the vehicle #1 is located in a lane #2, and a driver of the vehicle #1 has an intent of manipulating the vehicle #1 to depart from the lane #2 to a lane #1 through a lane line #1. A vehicle #2 is located in a lane other than the lane #1 and the lane #2 (for example, a lane adjacent to the lane #1 on the other side or a lane crossing the lane #1), and it is predicted that the vehicle is to travel into the lane #1. A traveling route of the vehicle #2 and a pose at each moment may be predicted based on data collected by a sensing system of the vehicle #1. A lane change route of the vehicle #1 and a pose at each moment may be predicted based on ego vehicle status information and driver manipulation information of the vehicle. Further, a risk of collision between the vehicle #1 and the vehicle #2 may be determined. When the vehicle #1 has a lane departure intent, if it is determined that the vehicle #1 and the vehicle #2 have a collision risk in a departure area, the vehicle #1 may be controlled to activate a lane keeping function, so that the vehicle #1 keeps traveling in the lane #2, to avoid unexpected risk costs. For example, when the vehicle #1 collides with the vehicle #2 in the departure area, the lane keeping function may be activated. For another example, if a difference between a time to collision TTC between the vehicle #1 and the vehicle #2 and a time to lane cross TTLC of the vehicle #1 is greater than preset duration (for example, 15 seconds or 18 seconds), it may be considered that the driver has a sufficient reaction time, and the lane keeping function may not be activated. For another example, if a difference between a time to collision TTC between the vehicle #1 and the vehicle #2 and a time to lane cross TTLC of the vehicle #1 is 1 second or 2 seconds, it may be considered that the driver does not have a sufficient reaction time, and the lane keeping function may be activated. For another example, if a collision is expected to occur in the departure area, and a distance between a location at which the collision is expected to occur and the lane line #1 is less than a preset length (for example, 70 centimeters or 80 centimeters), it may be considered that the driver does not have a sufficient reaction time, and the lane keeping function may be activated. For another example, if a collision is expected to occur in the departure area, and a transverse distance between a location at which the collision is expected to occur and the lane line #1 is greater than 3 meters or 2.7 meters, it may be considered that the driver has s sufficient reaction time, and the lane keeping function may not be activated.

In another embodiment, as shown in (b) in FIG. 7, the vehicle #1 is located in a lane #2, a vehicle #2 is located in an adjacent lane on the other side of a lane #1, a vehicle #3 is located in the lane #1, and the vehicle #3 is located in a blind area of a field of view of the vehicle #1. The vehicle #1 has an intent of departure from the lane #2 to the lane #1 through a lane line #1, the vehicle #2 has an intent of traveling into the lane #1, and the vehicle #3 has an intent of keeping traveling in the lane #1. A sensing system of the vehicle #1 may collect pose information of the vehicle #2 and the vehicle #3, and traveling routes of the vehicle #2 and the vehicle #3 and/or poses within preset duration may be predicted based on the pose information. A probability of collision between the vehicle #1 and each of the vehicle #2 and the vehicle #3 may be determined. When it is determined that the vehicle #1 has a lane departure intent, if there is no risk of collision between the vehicle #1 and each of the vehicle #2 and the vehicle #3, a lane keeping function may not be activated, and the vehicle #1 is allowed to change the lane. If there is a risk of collision between the vehicle #1 and the vehicle #2 and/or the vehicle #3 in a departure area, a lane keeping function may be activated, the vehicle #1 is controlled to still travel in the lane #2, and a user is prompted with the collision risk, to avoid unexpected risk costs.

In another embodiment, as shown in (c) in FIG. 7, the vehicle #1 and a vehicle #4 are located in a lane #1, and the vehicle #4 is located in front of the vehicle #1. When the vehicle #1 has a lane departure intent, if there is a risk of collision between the vehicle #1 and the vehicle #4 outside a departure area (for example, the vehicle #4 decelerates, and the vehicle #1 may encounter a rear-end collision), the lane keeping function may not be activated, and the vehicle is allowed to change the lane, so that an unexpected collision caused by triggering lane keeping can be avoided.

For example, the departure area may be an area determined based on a TTLC point and a target point. For example, the departure area is an area of a half-lane width between the TTLC point and the target point in a lane direction.

In an embodiment, when there is a collision risk in the departure area, if the lane keeping function is not activated, the vehicle is in a lane change process when a collision occurs, and a response time left for the driver may be insufficient, or it may be difficult for the driver to manipulate the vehicle to avoid the collision. The lane keeping function is activated in this scenario to avoid unexpected risk costs.

In another embodiment, when there is a collision risk in an area outside the departure area, it may be considered that the driver has a sufficient time to respond to the collision risk, and the lane keeping function may not be activated in this scenario.

In embodiments of this application, whether to activate the lane keeping function is determined based on whether an area in which the predicted collision risk occurs is within the first area, so that a probability of incorrectly triggering the lane keeping function can be reduced, a quantity of surrounding obstacles that need to be considered can be reduced, occupation of computing resources can be reduced, and real-time performance can be improved.

In an embodiment, a driving intent of the driver may be determined based on vehicle manipulation information. In another embodiment, whether the driver has a lane departure intent may be determined according to any method in FIG. 4 to FIG. 6.

For example, whether there is a risk of collision between a vehicle and a surrounding obstacle may be determined based on environment information. For example, a pose of the dynamic or static obstacle may be predicted based on pose information of each obstacle in an environment, and whether the obstacle has a risk of collision with the vehicle is detected. For another example, as shown in FIG. 7, a risk of collision between the vehicle #1 and the vehicle #2 or the vehicle #3 may be detected, and a time to collision (time to collision, TTC), that is, a time at which the collision occurs, may be determined. When there is a lane departure intent, whether to activate the lane keeping function is determined based on the risk of collision between the vehicle and the surrounding obstacle.

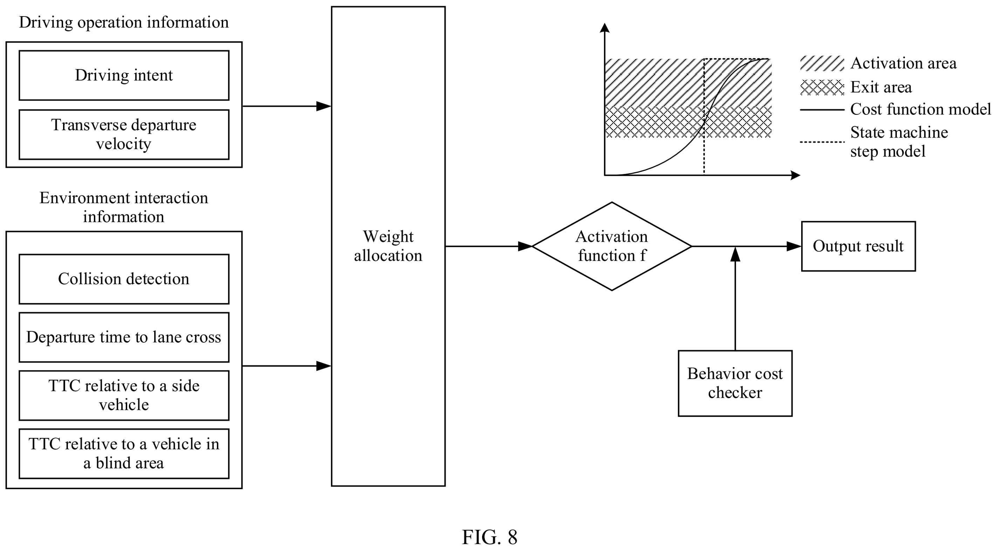

For example, FIG. 8 is a diagram of a method for activating a lane keeping function according to an embodiment of this application. As shown in FIG. 8, whether to activate the lane keeping function may be determined based on an activation model constructing the lane keeping function. The activation model may be understood as a prediction model used to determine whether to activate the lane keeping function in the method 300.

For example, as shown in FIG. 8, an equation model of an activation function may be determined based on information such as a driving intent of a driver, ego vehicle status information of a vehicle (for example, a transverse velocity of the vehicle), a predicted traveling route of the ego vehicle, a predicted traveling route of another vehicle, a collision detection result at each time node before lane change is completed, a TTLC of the ego vehicle, a TTC between the vehicle and a transversely parallel vehicle in a departure lane, and a TTC between the vehicle and a vehicle in a blind area, and a weight corresponding to each item. For example, the activation function may be in a form of a continuous function, for example, an S (sigmoid) function. For another example, probability calibration may be performed on the activation model by using a classification model of machine learning, to determine a more proper activation occasion. For another example, the activation model may be obtained through training based on a TTC and a location of a collision between a sample vehicle and a sample obstacle, and a running status of a marked lane keeping function when the collision occurs. For another example, the activation model may be obtained through training based on a driver intent of a sample vehicle, information about interaction between the sample vehicle and an environment, and a determining result of whether the lane keeping function needs to be activated.

In an embodiment, a value of the activation function may be determined based on a value of each input parameter of the activation function. When the value of the activation function is within an activation area, the lane keeping function may be activated. When the activation function is within an exit area, the lane keeping function may be exited. For example, to distinguish stable activation of the function and avoid frequent incorrect activation, a longitudinal interval of the activation area may be greater than a longitudinal interval of the exit area. For another example, based on the activation function, behavior costs may be further detected, to screen out an unexpected correction behavior and a risky correction behavior, so as to ensure safety of the lane keeping function. The value of the activation function may be understood as the first probability value in the method 300. The activation area may be understood as the first interval in the method 300, and the exit interval may be understood as the second interval in the method 300.

The following uses the vehicle #1 in FIG. 7 as an example for description.

In an embodiment, the vehicle #1 in (a) in FIG. 7 may predict a traveling route of the vehicle by determining a driving intent of a driver of the vehicle and with reference to an ego vehicle motion status of the vehicle #1. With reference to prediction information for poses of the vehicle #2 at a plurality of moments, a risk of collision with the vehicle #2 and a TTC between the vehicle #1 and the vehicle #2 can be detected. Based on the risk of collision between the vehicle #1 and the vehicle #2 in this scenario, with reference to the foregoing activation function, a value of the activation function in this scenario can be determined. When it is determined that the value is in the activation area, the lane keeping function may be activated, so as to avoid the risk of collision between the vehicle #1 and the vehicle #2.

In another embodiment, the vehicle #1 in (b) in FIG. 7 can detect a risk of collision with the vehicle #2 located on a side of the vehicle #1, a risk of collision with the vehicle #3 located in a blind area of the vehicle #1, and a TTC between the vehicle #1 and the vehicle #2 and/or the vehicle #3 by predicting a traveling route of the vehicle and with reference to prediction results for poses of the vehicle #2 and the vehicle #3 at a plurality of moments. For example, when it is determined that a collision between the vehicle #1 and the vehicle #2 is earlier than a collision between the vehicle #1 and the vehicle #3, whether to activate the lane keeping function can be determined based on a value of the activation function in this scenario, to ensure traveling safety of the vehicle.

In another embodiment, as shown in (c) in FIG. 7, when the vehicle #1 has an intent to depart from the lane #1, a value of the activation function in this scenario can be determined by detecting a risk of collision between the vehicle #1 and the vehicle #4 and a TTC, and whether to activate the lane keeping function is determined accordingly.

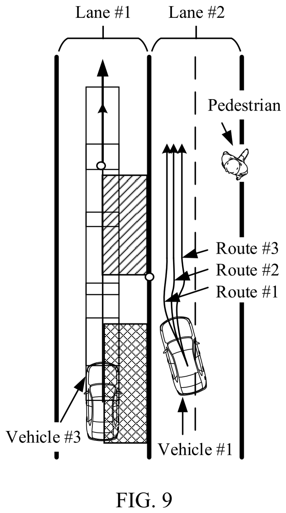

For example, FIG. 9 is a diagram of a lane keeping scenario according to an embodiment of this application. As shown in FIG. 9, the lane keeping function is activated based on ego vehicle information of the vehicle #1, and the vehicle #1 may be controlled, based on a plurality of possible planned routes (for example, a route #1 to a route #3), to keep traveling in the lane #1. However, when the vehicle #1 is controlled to keep in the lane #1 by using different routes, the vehicle has different performance. For example, as shown in FIG. 9, when the vehicle #1 is controlled to travel based on the route #1, an aligning and correction action for the vehicle #1 is relatively small. When the vehicle #1 is controlled to travel based on the route #3, an aligning and correction action for the vehicle #1 is relatively large. Different aligning and correction actions lead to different ride comfort of the vehicle. In addition, in some possible manners, when a curvature of the planned route is excessively large, or when there is an emergency condition (for example, a scenario in which the curvature changes greatly), if the vehicle is controlled, based on the planned route, to keep in the current lane, in a process in which a control module controls actions of a steering system, a braking system, a power system, and the like of the vehicle, it may be difficult to enable the vehicle to travel based on the planned route, and an actual traveling route may be greatly different from the planned route.

For example, a plurality of target points may be determined in the current lane, a plurality of planned routes may be determined based on the plurality of target points, a target traveling route may be determined from the plurality of planned routes based on comfort and safety indicators, and the vehicle is controlled, based on the target traveling route, to keep traveling in the current lane. For example, as shown in FIG. 9, safety performance of the route #1, the route #2, and the route #3 is close, and in terms of comfort, the route #1 is better than the route #2, and the route #3 is the worst. Based on the comfort and safety indicators, the route #1 may be determined from the route #1 to the route #3 as the target traveling route, and the lane keeping function is implemented based on the route #1.

For example, a traveling control boundary of the vehicle may be determined based on the risk of collision between the vehicle and the surrounding obstacle. For example, an area of the traveling control boundary may have a negative correlation with the collision risk. A higher collision risk indicates a narrower traveling control boundary.

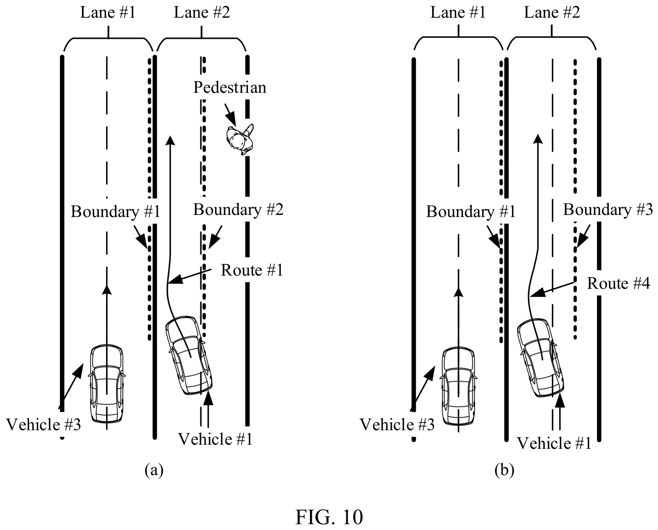

For example, FIG. 10 is a diagram of a lane keeping scenario according to an embodiment of this application.

For example, a safe passing area in the first lane may be determined based on the risk of collision between the vehicle and the surrounding obstacle. The first boundary may be determined based on the safe passing area in the first lane. An area within the first boundary may include only the safe passing area in the first lane, or may include a partial area of an adjacent lane. The first boundary may be continuously adjusted as the vehicle and/or the surrounding obstacle move/moves.

In an embodiment, as shown in (a) in FIG. 10, obstacles around a vehicle #1 include a vehicle #3 and a pedestrian, and a traveling control boundary may be determined as a boundary #1 and a boundary #2 based on a risk of collision between the vehicle and the foregoing obstacle. When the vehicle travels in an area between the boundary #1 and the boundary #2, there is no risk of collision between the vehicle #1 and the surrounding obstacle. For example, when the vehicle travels based on a determined route #1, the vehicle #1 is located in the area between the boundary #1 and the boundary #2. For another example, the route #1 in (a) in FIG. 10 may be the route #1 in FIG. 9. For another example, in this scenario, the boundary #1 and the boundary #2 may be understood as the first boundary in the method 300, and the area between the boundary #1 and the boundary #2 may be understood as the area within the first boundary in the method 300.

In another embodiment, in a scenario shown in (b) in FIG. 10, compared with the scenario shown in (a) in FIG. 10, a surrounding obstacle of the vehicle #1 does not include a pedestrian. When a traveling control boundary of the vehicle #1 is determined, a risk of collision between the vehicle #1 and the pedestrian may not be considered. A boundary #1 and a boundary #4 may be determined based on a risk of collision between the vehicle #1 and the surrounding obstacle, and the vehicle is controlled to travel in an area between the boundary #1 and the boundary #4.

For example, the area within the first boundary may be completely located in the first lane in which the vehicle is currently located. In some possible scenarios, the area within the first boundary may also include a partial area of an adjacent lane, as shown in (a) or (b) in FIG. 10.

In some possible implementations, one or more planned routes within the traveling control boundary may be determined based on the traveling control boundary, and a target traveling route may be determined from the planned routes within the control boundary based on a comfort indicator.

In some possible implementations, a plurality of planned routes may be determined, and traveling control boundaries corresponding to the plurality of planned routes are determined, so as to determine a planned route corresponding to a traveling control boundary without a collision risk. In other words, safety of the planned route may be determined by using the traveling control boundary corresponding to the planned route.

For example, the control module may monitor actual performance of the lane keeping function of the vehicle based on a control parameter. For example, the control parameter may include steering torque of a steering wheel, a transverse angular velocity, and the like.

In some possible implementations, in a human-machine co-driving scenario, a change rate of a control variable tracked by the control module may be adjusted based on a collision risk, so as to adjust a response speed. For example, when the collision risk is relatively high, a relatively high steering wheel torque change rate may be used, to improve a response speed of the vehicle, so as to avoid an unexpected collision of the vehicle.

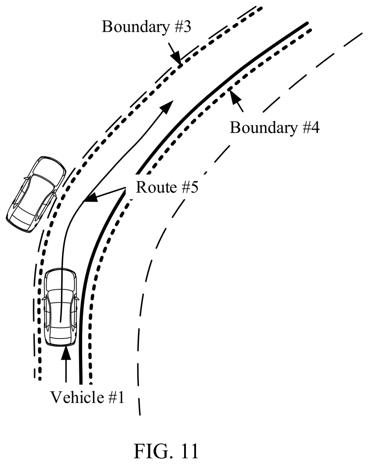

It should be understood that the foregoing descriptions about the target traveling route and the traveling control boundary are merely examples for ease of description, and the manner may also be applied to another traveling scenario. For example, FIG. 11 is a diagram of another lane keeping scenario according to an embodiment of this application. As shown in FIG. 11, a lane line in this scenario may alternatively be a curve. A lane keeping function of a vehicle may be activated based on a traveling specification in this scenario. For another example, the lane line may be a solid line or a dashed line, and a color of the lane line may be yellow, white, or another color. A specific form of the lane line is not limited in embodiments of this application.

In some possible implementations, the vehicle may include an interaction apparatus, and may prompt a user based on a collision risk by using the interaction apparatus. For example, different collision risks may be corresponding to different prompt levels. Prompts at different levels can be used to avoid a panic of the user caused by an inappropriate prompt.

In some possible implementations, the user may be prompted through vibration of a steering wheel and/or a safety belt. Different vibration frequencies can be used for different collision risks.

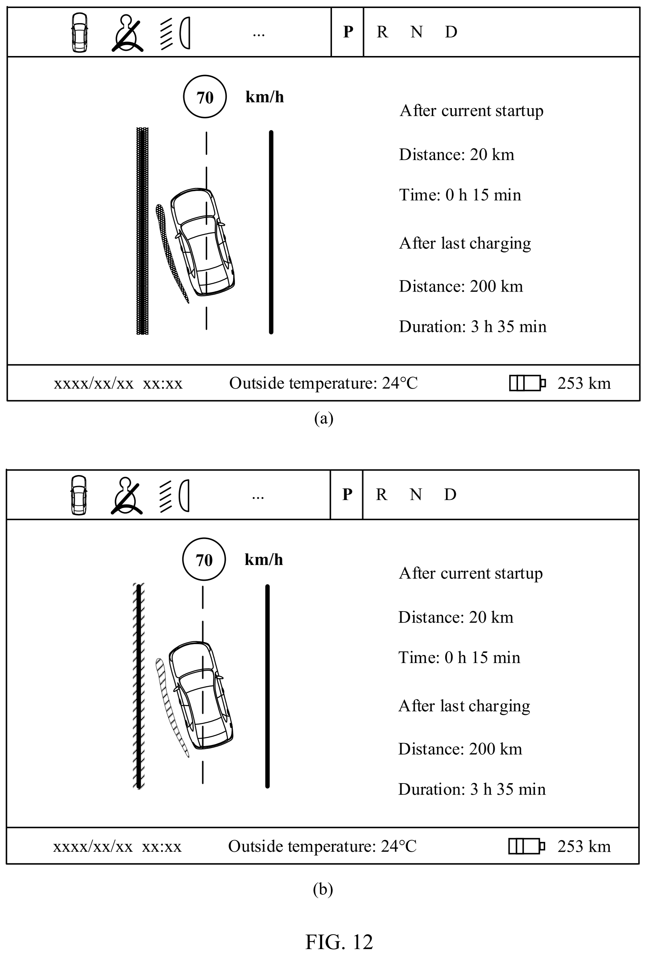

In some possible implementations, the user may be prompted by using a display apparatus such as a central control screen or a dashboard. With reference to FIG. 12, the following uses an example in which the dashboard is used to prompt the user for description.

For example, FIG. 12 is a diagram of an interaction interface according to an embodiment of this application. The user may be prompted with a collision risk of the vehicle by using graphical user interfaces shown in (a) and (b) in FIG. 12.

In an embodiment, as shown in (a) and (b) in FIG. 12, a prompt icon may be displayed on a lane line on a departure side and/or a departure side of the vehicle, to prompt the user with a collision risk that exists when the vehicle passes through the lane line on the departure side.

For example, the prompt icon may be determined based on the collision risk. For example, when the collision risk is relatively high, the collision risk prompt icon may be as shown in (a) in FIG. 12. For another example, when the collision risk is relatively low, the collision risk prompt icon may be as shown in (b) in FIG. 12.

In some possible implementations, the user may alternatively be prompted with the collision risk of the vehicle by using another display apparatus such as the central control screen.

It should be understood that the user may alternatively be prompted in another manner. In an embodiment, icons with different colors may be used to prompt the user based on risk degrees. For example, the lane line on the departure side may be highlighted in red, and risk shadow lines are set around the departure side of the ego vehicle. For another example, in an emergency scenario, the shadow lines may give a prompt by using a redder gradient contour. For another example, in a relatively slight risk activation scenario, a prompt is given by using a softer gradient contour. For another example, as the vehicle travels, when a risk of collision with the departure side changes, a color of a corresponding icon may be correspondingly adjusted.

It should be understood that the scenarios in FIG. 4 to FIG. 12 are merely examples for ease of description, and a lane keeping application scenario is not limited in this application.

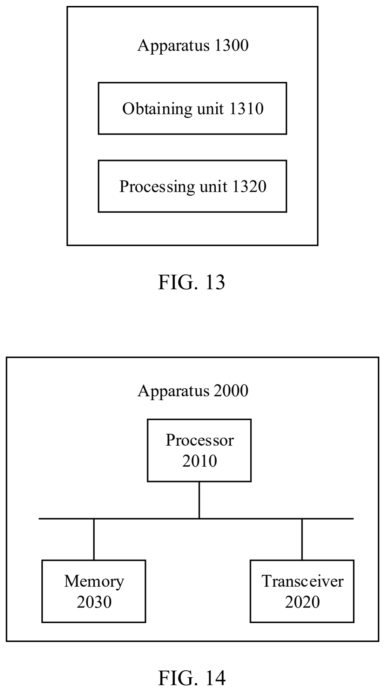

The method provided in embodiments of this application is described in detail above with reference to FIG. 3 to FIG. 12. The apparatus provided in embodiments of this application is described in detail below with reference to FIG. 13 and FIG. 14. Descriptions of apparatus embodiments correspond to the descriptions of the method embodiments. Therefore, for content that is not described in detail, refer to the foregoing method embodiments.

For example, FIG. 13 is a block diagram of a lane keeping apparatus 1300 (apparatus 1300 for short below) according to an embodiment of this application. The apparatus may include an obtaining unit 1310 and a processing unit 1320.

The apparatus 1300 may include units for performing any method in FIG. 3 to FIG. 12, and the units in the apparatus 1300 may be configured to perform corresponding procedures in the method embodiments in FIG. 3 to FIG. 12.

When the apparatus 1300 is configured to perform the method 300 in FIG. 3, the obtaining unit 1310 may be configured to perform step S310 in the method 500, and the processing unit 1320 may be configured to perform step S320 in the method 500.

Specifically, the obtaining unit 1310 may be configured to obtain a risk of collision between a vehicle and a surrounding obstacle; and the processing unit 1320 may be configured to: when determining that there is a lane departure intent, determine, based on the collision risk, whether to activate a lane keeping function of the vehicle.

Optionally, the processing unit 1320 may be further configured to determine a first area, where the first area is located in an adjacent lane of a lane in which the vehicle is currently located; and the processing unit 1320 may be configured to: when the vehicle has a collision risk in the first area, activate the lane keeping function of the vehicle; or when the vehicle has a collision risk in another area outside the first area, not activate the lane keeping function.

Optionally, the obtaining unit 1310 may be configured to: obtain first prediction information of the vehicle, where the first prediction information may indicate the first area and a first time to lane cross, and the first time to lane cross is a time at which the vehicle travels from the first lane in which the vehicle is currently located to the first area; predict motion status information of the surrounding obstacle; and determine, based on the first prediction information and the predicted motion status information of the surrounding obstacle, whether there is the risk of collision between the vehicle and the surrounding obstacle.

Optionally, the processing unit 1320 may be further configured to: determine a first probability value based on the risk of collision between the vehicle and the surrounding obstacle; and when the first probability value is within a first interval, activate the lane keeping function of the vehicle; or when the first probability value is within a second interval, not activate the lane keeping function of the vehicle. A range of the first interval is greater than a range of the second interval, and a minimum value of the first interval is greater than a maximum value of the second interval.

Optionally, the processing unit 1320 may be further configured to determine the first interval and the second interval based on information about manipulation of a driver for the vehicle.

Optionally, the processing unit 1320 may be configured to: obtain a plurality of planned routes in the first lane in which the vehicle is currently located, where curvatures of the planned routes are different from each other; determine a first planned route from the plurality of planned routes based on the risk of collision between the vehicle and the surrounding obstacle and the curvatures of the planned routes; and control, based on the first planned route, the vehicle to travel in the first lane.

Optionally, the processing unit 1320 may be configured to: determine a first boundary based on the collision risk, where a part or all of an area of the first lane in which the vehicle is currently located may be included within the first boundary; and control the vehicle to travel within the first boundary.

Optionally, the processing unit 1320 may be configured to: determine a change rate of a first control parameter based on the collision risk; and control turning of the vehicle based on the change rate of the first control parameter.

Optionally, the vehicle may include an interaction apparatus, and the processing unit 1320 may be further configured to: determine a prompt level based on the collision risk; and prompt a user with the collision risk based on the prompt level by using the interaction apparatus.

It should be understood that division into the units in the foregoing apparatus is merely logical function division. During actual implementation, all or some of the units may be integrated into one physical entity, or may be physically separated. All the units of the foregoing apparatus may be implemented in a form of invoking software by a processor, or may be implemented in a form of a hardware circuit, or some of the units are implemented in a form of invoking software by a processor, and the remaining units are implemented in a form of a hardware circuit. In addition, all or some of the units in the foregoing apparatus may be integrated, or may be implemented independently.

In a specific implementation process, the obtaining unit 1310 may be implemented by at least one transceiver or transceiver-related circuit, and the processing unit 1320 may be implemented by at least one processor or processor-related circuit. In an example, one or more processors may determine whether a driver has a lane departure intent. In an example, one or more processors may determine, based on a collision risk, whether to activate a lane keeping function of a vehicle.

For example, in a specific implementation process, the apparatus 1300 may be the vehicle 100 shown in FIG. 1, or the apparatus 1300 may be a terminal such as the computing platform 150 disposed in the vehicle. Alternatively, the apparatus 1300 may be a processor or a chip in the terminal, for example, a processor or a chip in the computing platform 150.

In some possible implementations, the apparatus 1300 may alternatively be a cloud server, or may be a chip or a processing circuit disposed in the cloud server, or the like. For example, the cloud server may exchange information with the vehicle, and the cloud server may indicate, by delivering an instruction, a working status of a lane keeping function of the vehicle.

For example, FIG. 14 is a block diagram of another lane keeping apparatus 2000 (apparatus 2000 for short below) according to an embodiment of this application. The apparatus 2000 may include a processor 2010, an interface circuit 2020, and a memory 2030. The processor 2010, the interface circuit 2020, and the memory 2030 are connected through an internal connection path. The memory 2030 is configured to store instructions. The processor 2010 is configured to execute the instructions stored in the memory 2030, to receive/send some parameters through the interface circuit 2020. Optionally, the memory 2030 may be coupled to the processor 2010 through an interface, or may be integrated with the processor 2010.

In some possible implementations, the apparatus 2000 may be disposed in the vehicle 100 shown in FIG. 1. In an embodiment, the apparatus 2000 may be the computing platform 150 shown in FIG. 1. In another embodiment, the apparatus 2000 may be a processor or a chip of the computing platform 150.

In some possible implementations, the apparatus 2000 may alternatively be a cloud server, or may be a chip or a processing circuit disposed in the cloud server, or the like. For example, the cloud server may exchange information with the vehicle, and the cloud server may indicate, by delivering an instruction, a working status of a lane keeping function of the vehicle.

It should be noted that the interface circuit 2020 may include but is not limited to a transceiver apparatus like an input/output interface (input/output interface), to implement communication between the apparatus 2000 and another device.

The interface circuit 2020 may be configured to implement communication between the apparatus 2000 and another device or a communication network. For example, information collected by a sensor may be obtained through the interface circuit 2020, and an execution apparatus of the vehicle may be controlled to perform a corresponding operation.

An embodiment of this application further provides a vehicle. The vehicle includes the apparatus 1300 or the apparatus 2000.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods can be implemented by using a hardware integrated logic circuit in the processor, or by using instructions in a form of software. The method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be understood that, for the purpose of convenient and brief description, for a detailed working process and beneficial effects of the foregoing system, apparatus, and unit, refer to a corresponding process in the foregoing method embodiments. Details are not described herein again.

The terms used in embodiments of this application are merely intended to describe specific embodiments, but are not intended to limit this application. The singular forms "one", "a", "the", "the foregoing", "this", and "the one" used in this specification and the appended claims of this application are also intended to include forms such as "one or more", unless otherwise clearly specified in the context. It should be further understood that, in the following embodiments of this application, "at least one" and "one or more" mean one, two, or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, for example, a USB flash disk, a removable hard disk, a read-only memory, a random access memory, a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A lane keeping method, comprising:
obtaining a risk of collision between a vehicle and a surrounding obstacle; and
when determining that there is a lane departure intent, determining, based on the collision risk, whether to activate a lane keeping function of the vehicle.

2. The method according to claim 1, wherein the method further comprises:
determining a first area based on the lane departure intent, wherein the first area is located in an adjacent lane of a first lane in which the vehicle is currently located; and
the determining, based on the collision risk, whether to activate a lane keeping function of the vehicle comprises:
when a risk of collision between the vehicle and the surrounding obstacle in the first area meets a preset condition, activating the lane keeping function of the vehicle; or
when the vehicle has a collision risk in another area outside the first area, controlling the lane keeping function to be in a deactivated state.

3. The method according to claim 2, wherein the obtaining a risk of collision between a vehicle and a surrounding obstacle comprises:
obtaining first prediction information of the vehicle, wherein the first prediction information indicates a first time to lane cross and the first area, and the first time to lane cross is a time at which the vehicle travels from the first lane to the first area;
predicting motion status information of the surrounding obstacle; and
determining the risk of collision between the vehicle and the surrounding obstacle based on the first prediction information and the motion status information of the surrounding obstacle.

4. The method according to any one of claims 1 to 3, wherein the determining, based on the collision risk, whether to activate a lane keeping function of the vehicle comprises:
inputting the collision risk into a prediction model, to obtain a probability value of activating the lane keeping function, wherein the prediction model is obtained through training based on sample data, and the sample data comprises information about a collision between a sample vehicle and a sample obstacle and a determining result of whether to activate a lane keeping function of the sample vehicle; and
when the probability value is within a first interval, activating the lane keeping function of the vehicle; or
when the probability value is within a second interval, controlling the lane keeping function to be in the deactivated state, wherein a maximum value of the second interval is less than a minimum value of the first interval.

5. The method according to claim 4, wherein the method further comprises:
determining the first interval and the second interval based on information about manipulation of a driver for the vehicle.

6. The method according to any one of claims 1 to 5, wherein the method further comprises:
obtaining a first planned route and a second planned route in the first lane in which the vehicle is currently located, wherein curvatures of the first planned route and the second planned route are different;
determining a target planned route from the first planned route and the second planned route based on the collision risk, the curvature of the first planned route, and the curvature of the second planned route; and
when the lane keeping function is activated, controlling, based on the target planned route, the vehicle to travel in the first lane.

7. The method according to any one of claims 1 to 6, wherein the method further comprises:
determining a first boundary based on the collision risk, wherein a part or all of an area of the first lane in which the vehicle is currently located is comprised within the first boundary; and
when the lane keeping function is activated, controlling the vehicle to travel within the first boundary.

8. The method according to any one of claims 1 to 7, wherein the method further comprises:
determining a change rate of a turning parameter based on the collision risk; and
when the lane keeping function is activated, controlling turning of the vehicle based on the change rate of the turning parameter.

9. The method according to any one of claims 1 to 8, wherein the vehicle comprises a prompt apparatus, and the method further comprises:
when the lane keeping function is activated, prompting, based on the collision risk by using the prompt apparatus, a user with existence of the collision risk due to departure of the vehicle.

10. A lane keeping apparatus, comprising:
an obtaining unit, configured to obtain a risk of collision between a vehicle and a surrounding obstacle; and
a processing unit, configured to: when determining that there is a lane departure intent, determine, based on the collision risk, whether to activate a lane keeping function of the vehicle.

11. The apparatus according to claim 10, wherein the processing unit is further configured to:
determine a first area based on the lane departure intent, wherein the first area is located in an adjacent lane of a first lane in which the vehicle is currently located; and
the processing unit is configured to:
when a risk of collision between the vehicle and the surrounding obstacle in the first area meets a preset condition, activate the lane keeping function of the vehicle; or
when the vehicle has a collision risk in another area outside the first area, control the lane keeping function to be in a deactivated state.

12. The apparatus according to claim 11, wherein the obtaining unit is configured to:
obtain first prediction information of the vehicle, wherein the first prediction information indicates a first time to lane cross and the first area, and the first time to lane cross is a time at which the vehicle travels from the first lane to the first area;
predict motion status information of the surrounding obstacle; and
determine the risk of collision between the vehicle and the surrounding obstacle based on the first prediction information and the motion status information of the surrounding obstacle.

13. The apparatus according to any one of claims 10 to 12, wherein the processing unit is configured to:
input the collision risk into a prediction model, to obtain a probability value of activating the lane keeping function, wherein the prediction model is obtained through training based on sample data, and the sample data comprises information about a collision between a sample vehicle and a sample obstacle and a determining result of whether to activate a lane keeping function of the sample vehicle; and
when the probability value is within a first interval, activate the lane keeping function of the vehicle; or
when the probability value is within a second interval, control the lane keeping function to be in the deactivated state, wherein a maximum value of the second interval is less than a minimum value of the first interval.

14. The apparatus according to claim 13, wherein the processing unit is further configured to:
determine the first interval and the second interval based on information about manipulation of a driver for the vehicle.

15. The apparatus according to any one of claims 10 to 14, wherein the processing unit is configured to:
obtain a first planned route and a second planned route in the first lane in which the vehicle is currently located, wherein curvatures of the first planned route and the second planned route are different;
determine a target planned route from the first planned route and the second planned route based on the collision risk, the curvature of the first planned route, and the curvature of the second planned route; and
control, based on the target planned route, the vehicle to travel in the first lane.

16. The apparatus according to any one of claims 10 to 15, wherein the processing unit is configured to:
determine a first boundary based on the collision risk, wherein a part or all of an area of the first lane in which the vehicle is currently located is comprised within the first boundary; and
when the lane keeping function is activated, control the vehicle to travel within the first boundary.

17. The apparatus according to any one of claims 10 to 16, wherein the processing unit is configured to:
determine a change rate of a turning parameter based on the collision risk; and
when the lane keeping function is activated, control turning of the vehicle based on the change rate of the turning parameter.

18. The apparatus according to any one of claims 10 to 17, wherein the vehicle comprises a prompt apparatus, and the processing unit is further configured to:
when the lane keeping function is activated, prompt, based on the collision risk by using the prompt apparatus, a user with existence of the collision risk due to departure of the vehicle.

19. A lane keeping apparatus, comprising:
a memory, configured to store a computer program; and
a processor, configured to execute the computer program stored in the memory, to enable the apparatus to perform the method according to any one of claims 1 to 9.

20. A vehicle, comprising the apparatus according to any one of claims 10 to 19.

21. A computer-readable storage medium, wherein the computer-readable storage medium stores a computer program, and when the computer program is executed by a computer, the method according to any one of claims 1 to 9 is implemented.
